# EUROPÄISCHE PATENTSCHRIFT

(11) **EP 0 470 672 B1**
(45) Veröffentlichungstag und Bekanntmachung des Hinweises auf die Patenterteilung: **20.11.1996**
(21) Anmeldenummer: 91202021.1
(22) Anmeldetag: 06.08.1991
(51) Int. Cl.: H02P 7/05, H02P 6/18

(54) **Schaltungsanordnung zum Kommutieren eines Reluktanzmotors**
Reluctance motor commutating circuit assembly
Arrangement d'un circuit de commutation d'un moteur à réluctance

(30) Priorität: 10.08.1990 DE 4025350
(43) Veröffentlichungstag der Anmeldung: 12.02.1992
(73) Patentinhaber: Philips Patentverwaltung GmbH, 22335 Hamburg (DE); Philips Electronics N.V., 5621 BA Eindhoven (NL)
(72) Erfinder: Austermann, Ralf, W-5120 Herzogenrath-Kohlscheid (DE)
(74) Vertreter: Peters, Carl Heinrich, Dipl.-Ing.

(56) Entgegenhaltungen:
- DE-A- 2 556 809
- FR-A- 2 249 478
- US-A- 4 074 179
- US-A- 4 450 396
- US-A- 4 896 089
- CONFERENCE RECORD OF THE 1990 IEEE INDUSTRY APPLICATIONS SOCIETY ANNUAL MEETING 7. Oktober 1990, SEATTLE, WASHINGTON Seiten 518 - 524 M.EHSANI &AL. 'Elimination of discrete position sensor and current sensor in switched reluctance motor drives'
- REVUE GéNéRALE DE L'éLECTRICITé Nr. 3, M rz 1987, PARIS Seiten 28 - 34 B.LAPORTE & AL. 'Machines à réluctance variable: structures et applications'

## Beschreibung

Die Erfindung bezieht sich auf eine Anordnung gemäß dem Oberbegriff des Hauptanspruchs.

Aus der US-PS 4,074,179 ist eine Anordnung und eine Steuerung zum Angeben der Position eines Rotors eines Schrittmotors für dessen schrittweise Fortbewegung bekannt, worin gesonderte Positionsgeber nicht benötigt werden. Diese Anordnung umfaßt Vorrichtungen zum Bestimmen des Stromes oder zum Bestimmen des Maßes der Stromänderung, der bzw. die in den Motorwicklungen fließt. Dazu wird je Wicklungsstrang eine induzierte Spannung über einem Widerstand abgegriffen und je einem gesonderten Phasenspitzendetektor zugeführt. Dieser liefert eine impulsförmige Spannung, die mit entsprechenden, von den übrigen Wicklungssträngen gewonnenen Spannungen einer Logikschaltung zugeführt wird. Diese Logikschaltung umfaßt unter anderem einen Multiplexer, eine Verzögerungsanordnung, einen Auswahlschalter und einen Richtungsauswahlschalter. Über diese wird ein sogenannter Sequenzer angesteuert, der eine Reihe von Flipflops umfaßt, deren Ausgangssignale zum Schalten der einzelnen Wicklungsstränge herangezogen werden. Die Logikschaltung wirkt mit dem Sequenzer in der Weise zusammen, daß dessen Flipflops nacheinander mit von der Logikschaltung abgegebenen Impulsen in ihren "1"-Zustand geschaltet werden.

Aus der DE-OS 25 56 809 ist ein Steuerkreis für einen Reluktanzmotor mit sich ändernder magnetischer Leitfähigkeit bekannt. Darin wird die Änderung der Reluktanz und demzufolge der magnetischen Leitfähigkeit eines eine Motorwicklung durchsetzenden magnetischen Kreises beim Drehen des Läufers im Verhältnis zum Ständer ausgenutzt. Bei dieser Anordnung bewirkt die Läuferdrehung außerdem auch eine Änderung der Selbstinduktivität der Motorwicklung, wobei die Selbstinduktivität in unmittelbarer Beziehung zur magnetischen Leitfähigkeit des magnetischen Kreises steht. Zur Speisung mit Energie ist die Wicklung über eine Halbleiter-Schalteinrichtung mit einer Gleichspannungsquelle verbindbar. An die Motorwicklung sind Schaltungsmittel angeschlossen, durch welche die in der Motorwicklung während der Läuferdrehung und des Sperrzustandes der Halbleiter-Schalteinrichtung induzierte elektromotorische Kraft abtastbar und die Halbleiter-Schalteinrichtung durchschaltbar ist, wenn die abgetastete elektromotorische Kraft einen vorbestimmten Wert erreicht.

Aus der US-PS 4,450,396 ist eine elektronisch gesteuerte Synchronmaschine bekannt,die Anker- und Feldwicklungen auf demselben, magnetisch leitfähigen Magnetkörper besitzt. Die Selbstinduktivität der Anker- und Feldwicklungen ist im wesentlichen unabhängig von der Lage zwischen dem Rotor und dem Stator der Maschine, dagegen variiert die Gegeninduktivität zwischen den Ankerwicklungen und den Feldwicklungen mit der relativen Lage. Ein Lagedetektor für den Rotor mißt die Spannung in einer der Maschinenwicklungen und setzt diese Spannung in Beziehung zur relativen Lage zwischen Rotor und Stator. Weiterhin sind Schalter vorgesehen, um den elektrischen Stromfluß in der Ankerwicklung auf Grundlage der mit dem Detektor gemessenen Spannung zu steuern. Dabei ist eine Lösungsform beschrieben, in der Meßsignale für die relative Lage zwischen Rotor und Stator von den Ankerwicklungen abgegriffen werden. Zum Steuern der Schalter ist eine Steuerung vorgesehen, die mit einem Mikroprozessor ausgerüstet ist.

Die Erfindung hat die Aufgabe, eine einfache Schaltungsanordnung zum Kommutieren eines Reluktanzmotors zu schaffen, die universell für Reluktanzmotoren mit in mehrere Stränge unterteilten Wicklungen einsetzbar ist.

Diese Aufgabe wird bei einer Anordnung der eingangs genannten Art erfindungsgemäß durch die kennzeichnenden Merkmale des Hauptanspruchs gelöst.

Bei dem von der erfindungsgemäßen Schaltungsanordnung kommutierten Reluktanzmotor werden die einzelnen Stränge der Wicklung in zyklischer Reihenfolge mit Strömen beaufschlagt. Die Stromzufuhr zu den einzelnen Strängen wird durch ein Auslösesignal gesteuert, das aus einer Spannung an einem Strang gewonnen wird, der zu dem mit Strom zu beaufschlagenden Strang bzw. den zu beaufschlagenden Strängen des Motors in einer vorgegebenen Position steht. Die induzierte Spannung wird somit nicht stets von demselben Strang, sondern ebenfalls zyklisch umlaufend nacheinander von verschiedenen Strängen abgegriffen. Dabei kann zum Abgreifen der Spannung vorteilhaft ein Strang herangezogen werden, der gerade nicht mit einem Strom für den Antrieb des Motors beaufschlagt ist. Durch die Trennung von der Leistungszufuhr wird auf diese Weise die Positionsmessung vereinfacht. Vorteilhaft wird dabei ausgenutzt, daß die in einem Strang abgegriffene Spannung mittels einer Gegeninduktivität zwischen diesem und dem in Richtung der Bewegungskoordinate des Rotors voraufgehenden Strang von dem darin fließenden Strom induziert wird. Je nach der Anzahl der Stränge der Wicklung des Reluktanzmotors wird die Zuordnung zwischen dem Strang, in dem die Spannung abgegriffen wird, und den ein- bzw. auszuschaltenden Strängen derart vorgenommen, daß stets ein zyklischer Umlauf über alle Stränge erreicht wird.

Die erfindungsgemäße Schaltungsanordnung umfaßt je einen Signalaufbereitungszweig zu jedem Strang zum Gewinnen des Auslösesignals aus der an diesem Strang abgegriffenen induzierten Spannung. Damit wird ein modularer Aufbau der erfindungsgemäßen Schaltungsanordnung erreicht, in dem für eine beliebig wählbare Anzahl von Strängen die entsprechenden Signalaufbereitungszweige und Stränge der Wicklung in einer durch die Erfindung gegebenen Reihenfolge und Zuordnung miteinander verknüpft werden können. Steuerungskonzepte für Reluktanzmotoren unterschiedlicher Bauart sind damit sehr schnell und einfach zu erstellen.

Bevorzugt wird die abgegriffene Spannung im wesentlichen von der Veränderung der Gegeninduktivität bei Bewegung des Rotors bestimmt. Grundsätzlich ist die induzierte Spannung außer von der Gegeninduktivität auch vom zeitlichen Verlauf des sie induzierenden Stroms im voraufgehenden Strang abhängig. Um diese Abhängigkeit zu unterdrücken, wird der Strom in der Wicklung während der Dauer seines Auftretens vorzugsweise konstant gehalten, so daß von einer etwaigen Stromvariation induzierte Spannungsanteile wenigstens weitgehend ausgeschlossen sind. Damit wird die induzierte Spannung ein präzises Maß der Veränderung der Gegeninduktivität und damit der Position zwischen Rotor und Stator.

Weitere, vorteilhafte Ausgestaltungen der Erfindung ergeben sich aus den Unteransprüchen.

Ein Ausführungsbeispiel der Erfindung ist in der Zeichnung dargestellt und wird im nachfolgenden näher beschrieben. Es zeigen
- Fig. 1: den Querschnitt eines Reluktanzmotors mit einer in drei Strängen aufgeteilten Wicklung im Schema,
- Fig. 2: Signalverläufe in einem Reluktanzmotor gemäß Fig. 1,
- Fig. 3: das Blockschaltbild einer erfindungsgemäßen Schaltungsanordnung zum Kommutieren des Reluktanzmotors gemäß Fig. 1.

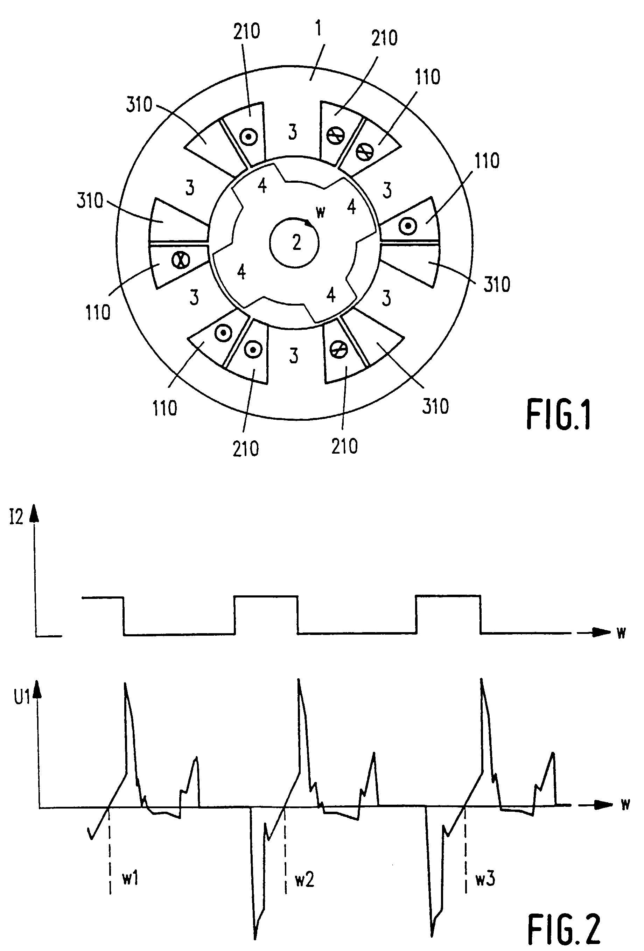

Der Reluktanzmotor gemäß Fig. 1 weist einen Stator 1 mit kreisförmigem Querschnitt auf, in dessen Zentrum ein Rotor 2 drehbar gelagert ist. Die Bewegungskoordinate des Rotors 2 ist mit w eingezeichnet. Im Stator 1 sind mehrere Längsnuten angeordnet, die durch Polschuhe 3 bildende Stege des Statormaterials voneinander getrennt sind. Entsprechend der Anzahl der Stränge der Wicklung des Reluktanzmotors sind im Stator 1 sechs Polschuhe 3 gleichmäßig über dessen Umfang verteilt angeordnet. Entsprechend weist der Rotor 2 im Querschnitt einen gezahnten Umfang auf, in dem durch vergleichbare Längsnuten vier Pole 4 ausgearbeitet sind. Wenn somit zwei einander gegenüberliegende Pole 4 mit zwei einander gegenüberliegenden Polschuhen 3 fluchten, nehmen die anderen beiden, einander gegenüber stehend und um 90^{o} versetzt angeordneten Pole 4 des Rotors 2 je eine Mittelstellung zwischen je zwei der übrigen Polschuhe 3 des Stators 1 ein.

Die Stränge 110, 210, 310 der Wicklung sind um je zwei einander gegenüberliegende Polschuhe 3 des Stators 1 herum angeordnet. In Fig. 1 erscheint somit jeder Strang mit vier Querschnittsflächen, die mit identischen Bezugszeichen versehen sind. In der Reihenfolge der Stränge 110, 210, 310 sind diese im Gegenuhrzeigersinn auf die Polschuhe 3 des Stators 1 verteilt.

Außer der beispielhaften Anordnung nach Fig. 1 ist die erfindungsgemäße Schaltungsanordnung auch zum Kommutieren von Reluktanzmotoren anderer Geometrien einsetzbar. Insbesondere kann ein solcher Reluktanzmotor eine andere Anzahl von Strängen und damit Polschuhen als derjenige nach Fig. 1 aufweisen; auch eine Anordnung als Linearmotor ist möglich.

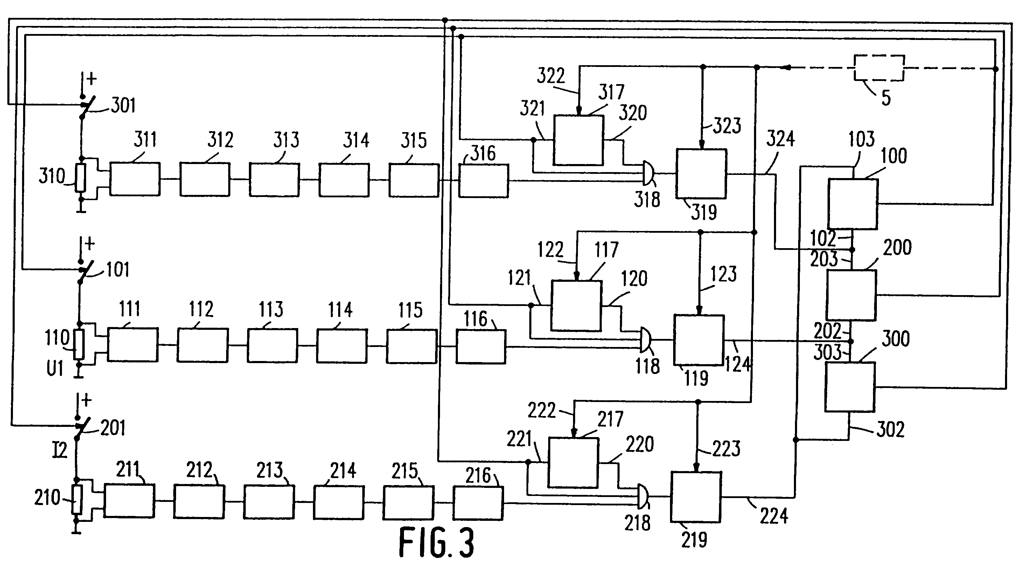

Fig. 3 zeigt ein Beispiel für eine erfindungsgemäße Schaltungsanordnung zum Kommutieren des Reluktanzmotors nach Fig. 1 mit den drei Strängen 110, 210, 310 der Wicklung, die im linken Teil der Fig. 3 schematisch vereinfacht dargestellt sind. Jeder der Stränge 110, 210, 310 ist in Reihe mit einem Schalter 101, 201 bzw. 301 zwischen einen mit einem Pluszeichen markierten Speisespannungsanschluß und Masse geschaltet. Über den Speisespannungsanschluß wird bevorzugt eine Gleichspannung zur Energieversorgung des Reluktanzmotors zugeführt. Diese Gleichspannung kann einen konstanten Wert aufweisen; vorzugsweise wird sie jedoch in Form einer hochfrequenten, impulsbreitenmodulierten, pulsierenden Gleichspannung zugeführt, wodurch eine einfache Leistungsregelung des Reluktanzmotors ermöglicht wird.

Zu jedem der Stränge 110, 210 bzw. 310 umfaßt die Schaltungsanordnung nach Fig. 3 einen Signalaufbereitungszweig 111 bis 119, 211 bis 219 bzw. 311 bis 319, in dem aus der an dem jeweiligen Strang 110, 210 bzw. 310 abgegriffenen Spannung das Auslösesignal gewonnen und bereitgestellt wird. Weiterhin weist die Schaltungsanordnung nach Fig. 3 je einen Zustandsspeicher 100, 200 bzw. 300 zu jedem Strang 110, 210 bzw. 310 auf, in dem ein Steuersignal zum Steuern des dem Strang 110, 210 bzw. 310 zugeordneten Schalters 101, 201 bzw. 301 zum Schalten des Stromes im zugehörigen Strang 110, 210 bzw. 310 durch das Auslösesignal vom jeweils voraufgehenden Strang 210, 310 bzw. 110 erzeugt und durch das Auslösesignal vom nachfolgenden Strang 310, 210 bzw. 110 beendet wird. Die Schalter 101, 201, 301 lassen sich begrifflich zu einer Schaltvorrichtung für die Kommutierung des Reluktanzmotors zusammenfassen.

Aufbau und Funktionsweise der Signalaufbereitungszweige 111 bis 119, 211 bis 219, 311 bis 319 in Verbindung mit den Zustandsspeichern 100, 200, 300, den Schaltern 101, 201, 301 und den Strängen 110, 210, 310 sind nachfolgend am Beispiel des ersten Stranges 110 erläutert.

Der mit dem ersten Strang 110 verbundene Signalaufbereitungszweig 111 bis 119 umfaßt einen Impedanzwandler 111 zum Abgreifen der im zugehörigen Strang 110 induzierten Spannung, einen Analogschalter 112 zum Ausblenden negativer Spannungsspitzen aus dem vom Impedanzwandler 111 abgegebenen Signal, eine Schaltflankenformstufe 113 bis 118 zum Bilden einer definierten Schaltflanke aus dem Ausgangssignal des Analogschalters 112 sowie eine Verzögerungsstufe 119, in der die Schaltflanke um ein vorgebbares Zeitintervall zum Bilden des Auslösesignals verzögert wird. Dabei weist der Impedanzwandler 111 zwei Eingänge auf, die mit je einem Anschluß des Strangs 110 verbunden sind und an denen die im Strang 110 induzierte Spannung anliegt. Im Impedanzwandler 111 werden die nachfolgenden Stufen des Signalaufbereitungszweigs vor den hohen Spannungen geschützt, die beim Betrieb am Strang 110 auftreten. Der sich anschließende Analogschalter 112 blendet insbesondere die negativen Spannungsspitzen aus, die beim Abschalten des Stroms im Strang 110 entstehen.

Dieses Signal wird in der Schaltflankenformstufe 113 bis 118 weiterverarbeitet, die dazu einen Verstärker 113 zum Verstärken des vom Analogschalter 112 gelieferten Signals, einen Tiefpaß 114 zum Unterdrücken hochfrequenter Schwingungen, einen Komparator 115 zur Flankenversteilerung und eine Ausblendschaltung 117, 118 zum Ausblenden unerwünschte Signalflanken in dem vom Komparator 115 gelieferten Signal innerhalb eines vorgebbaren Zeitintervalls umfaßt. Das vom Verstärker 113 verstärkte Signal wird im Tiefpaß 114 zumindest weitgehend von den hochfrequenten Schwingungen befreit, die außer als Störungen insbesondere auch durch eine der beschriebenen Schaltungsanordnung vorgeschaltete Leistungssteuervorrichtung entstehen können. Werden nämlich die mit dem Pluszeichen markierten Speisespannungsanschlüsse mit einer vorzugsweise impulsbreitenmodulierten Speisequelle verbunden, kann durch die Impulsbreitenmodulation die Leistung des Reluktanzmotors gesteuert werden.

Im Komparator 115 erfolgt vorzugsweise eine Verstärkung und Begrenzung des bis dahin aufbereiteten Signals, so daß dieses den Komparator 115 in der Form von Impulsfolgen hoher Flankensteilheit verläßt. Die so erzeugten Impulsflanken treten dabei zu den Zeitpunkten auf, zu denen das dem Komparator 115 zugeleitete Signal, das aus der im Strang 110 induzierten Spannung abgeleitet ist, einen im Komparator 115 erzeugten Vergleichspegel über- bzw. unterschreitet. Die Impulsflanken markieren somit die Zeitpunkte, zu denen die im Strang 110 induzierte Spannung entsprechend dem Übertragungsverhalten des Impedanzwandlers 111, des Analogschalters 112, des Verstärkers 113 und des Tiefpasses 114 einen vorbestimmten Wert erreicht.

Um aus einer Mehrzahl von Signalflanken am Ausgang des Komparators 115 eine bestimmte Flanke, die in fester zeitlicher Zuordnung zum Durchlauf der Bewegungskoordinate w des Rotors 2 steht, auswählen zu können, ist dem Komparator 115 eine Ausblendschaltung 117, 118 nachgeordnet, von der nur die erwünschte Signalflanke durchgelassen und die übrigen Signalflanken unterdrückt werden. Die Ausblendschaltung 117, 118 umfaßt eine Laufzeitstufe 117, die an ihrem Ausgang 120 ein ihrem Eingang 121 zugeführtes Signal um eine über einen Steuereingang 122 einstellbare Totzeit verzögert abgibt. Dem Eingang 121 der Laufzeitstufe 117 wird das Steuersignal vom voraufgehenden Strang 210 zugeführt, durch das auch der diesem Strang zugeordnete Schalter 201 gesteuert wird. Dieses Steuersignal gelangt über die Laufzeitstufe 117 verzögert und zusätzlich vom Eingang 121 unmittelbar an je einen Eingang eines UND-Gatters 118, dessen drittem Eingang außerdem das vom Komparator abgegebene, flankenversteilerte Signal zugeleitet wird. Durch das Steuersignal und die Laufzeitstufe 117 wird dabei ein über den Steuereingang 122 in seiner zeitlichen Anfangslage einstellbares Zeitfenster vorgegeben, innerhalb dessen die Flanken vom Komparator 115 auf die Verzögerungsstufe 119 geschaltet werden. Außerhalb dieses Zeitfensters erhält die Verzögerungsstufe 119 keine Signalflanken.

Die Verzögerungsstufe 119 entspricht in ihrer Funktion zumindest im wesentlichen der Laufzeitstufe 117. Auch ihre Verzögerungszeit kann über einen Steuereingang 123 einstellbar sein.

Am Ausgang 124 der Verzögerungsstufe 119 wird dann das Auslösesignal abgegeben, welches sowohl einem Löscheingang 202 des Zustandsspeichers 200 des voraufgehenden Strangs 210 als auch einem Setzeingang 303 des Zustandsspeichers 300 des nachfolgenden Strangs 310 zugeführt wird. Dadurch wird von dem am Ausgang 124 der Verzögerungsstufe 119 abgegebenen Auslösesignal aus dem ersten Signalaufbereitungszweig 111 bis 119 im Zustandsspeicher 300 des nachfolgenden Strangs 310 das Steuersignal für den Schalter 301 erzeugt und gleichzeitig im Zustandsspeicher 200 des Strangs 210 das Steuersignal für den Schalter 201 beendet. Anders ausgedrückt wird das Steuersignal zu dem Schalter jedes Strangs durch das Auslösesignal vom voraufgehenden Strang erzeugt und durch das Auslösesignal vom nachfolgenden Strang beendet.

Der Signalaufbereitungszweig 111 bis 119 umfaßt in Fig. 3 weiterhin eine Potentialtrennstufe 116, die innerhalb der Schaltflankenformstufe 113 bis 118 zwischen den Komparator 115 und die Ausblendschaltung 117, 118 eingefügt ist. Die Potentialtrennstufe 116 ist bevorzugt mit einem Optokoppler ausgebildet. Durch sie wird eine Potentialtrennung zwischen den mit dem Strang 110 verbundenen Stufen 111 bis 115 einerseits und den mit dem Schalter 101 verbundenen Stufen 117 bis 119 sowie den Zustandsspeichern 100 bis 300 andererseits erreicht.

Die Verzögerungs- bzw. Totzeiten der Laufzeitstufe 117 und auch der Verzögerungsstufe 119 sind über deren Steuereingänge 122 bzw. 123 in Abhängigkeit von der Drehzahl des Reluktanzmotors einstellbar. Dazu sind die Steuereingänge 122, 123 mit einer Drehzahlmeßstufe 5 verbunden. Diese kann im einfachsten Fall aus der Frequenz der Steuersignale für einen der Schalter 101, 201, 301 eine Steuerspannung ableiten, durch die die genannten Verzögerungszeiten einstellbar sind. In einer anderen Ausbildung der Drehzahlmeßstufe 5 kann diese auch ein digitales Steuersignal liefern. Außerdem können auch die Steuersignale für mehrere der Schalter 101, 201, 301 zur Steuerung der genannten Verzögerungszeiten herangezogen werden.

In Fig. 3 sind nun die identisch aufgebauten Signalaufbereitungszweige zu allen drei Strängen mit den zum beschriebenen Signalaufbereitungszweig für den ersten Strang 110 dargestellten Anschlüssen zu einer Gesamtschaltung verknüpft. Dabei bilden die Zustandsspeicher 100, 200, 300 bezüglich ihrer Löscheingänge 102, 202 bzw. 302 und ihrer Setzeingänge 103, 203 bzw. 303 eine ringförmige Anordnung, an die in der beschriebenen Weise die Schalter 101, 201 bzw. 301 und die Eingänge 121, 221 bzw. 321 der Laufzeitstufen 117, 217 bzw. 317 angeschlossen sind.

In der Schaltungsanordnung gemäß Fig. 3 sind die Elemente der nicht explizit beschriebenen, jedoch identisch aufgebauten Signalaufbereitungszweige 211 bis 219 und 311 bis 319 für den zweiten bzw. dritten Strang 210 bzw.310 mit in bezug auf den ersten Strang 110 korrespondierenden Bezugszeichen versehen, in denen die letzten beiden Stellen mit den letzten beiden Stellen der Bezugszeichen der entsprechenden Elemente aus dem Signalaufbereitungszweig zum ersten Strang 110 übereinstimmen und in denen die erste Stelle die Nummer des Strangs angibt.

Zur Erläuterung der Funktionsweise der Schaltungsanordnung nach Fig. 3 zum Kommutieren des Reluktanzmotors gemäß Fig. 1 sind in Fig. 2 beispielhaft der Verlauf des Stroms I2 im zweiten Strang 210 sowie die durch diesen Strom I2 im ersten Strang 110 induzierte Spannung U1 bei gesperrtem Schalter 101 dargestellt. Die Auftragung ist über der Bewegungskoordinate w des Rotors 2 vorgenommen. Der Strom I2 ist rechteckförmig, so daß durch seine Änderung nur beim Ein- und Ausschalten Spannungsimpulse im Strang 110 induziert werden. Diese Spannungsimpulse sind als positive bzw. negative Spannungsspitzen im Verlauf von U1 den Flanken des Stromes I2 zugeordnet erkennbar. Die übrigen Änderungen der Spannung U1 im Strang 110 ergeben sich aus der Veränderung der Gegeninduktivität zwischen dem Strang 210, in dem der Strom I2 fließt, und dem Strang 110, in dem die Spannung U1 induziert wird. In den Abschnitten der Bewegungskoordinate w, in denen der Strom I2 eingeschaltet ist, sind regelmäßige Spannungsanstiege der Spannung U1 zu beobachten, die auf eine Veränderung der Gegeninduktivität mit der Bewegungskoordinate w zurückzuführen sind. An den Bewegungskoordinatenpunkten w1, w2, w3 weist der Verlauf der Spannung U1 Nulldurchgänge auf, deren Lage im wesentlichen durch die Geometrie des Reluktanzmotors bestimmt ist und somit eine genaue Zuordnung zur Position des Rotors entlang seiner Bewegungskoordinate w aufweist. Umgekehrt kann daher aus dem Auftreten dieser Nulldurchgänge mit großer Genauigkeit auf die Lage des Rotors 2 geschlossen werden. Diese Nulldurchgänge werden in den Signalaufbereitungszweigen detektiert und es werden daraus die beschriebenen Signalflanken zur Bildung der Auslösesignale gewonnen.

## Patentansprüche

1. Anordnung, umfassend einen Reluktanzmotor sowie eine Schaltungsanordnung zum Kommutieren des einen gegenüber einem Stator (1) beweglichen Rotor (2) aufweisenden Reluktanzmotors mit einer Wicklung, die mindestens drei in zueinander wenigstens nahezu gleichen Abständen über der Bewegungskoordinate (w) des Rotors (2) angeordnete und in bestimmten Positionen des Rotors (2) gegenüber dem Stator (1) über eine Schaltvorrichtung (101, 201, 301) einzeln mit Strom beaufschlagbare Stränge (110, 210, 310) umfaßt, und einer Detektionsanordnung mit je einem Signalaufbereitungszweig (111 bis 119) zu jedem Strang (110), wobei durch den Signalaufbereitungszweig (111 bis 119) eine an jedem Strang (110) der Wicklung induzierte Spannung (U1) abgegriffen und, wenn die induzierte Spannung (U1) einen vorbestimmten Wert erreicht, daraus ein Auslösesignal (an 119) gewonnen wird, durch das die Schaltvorrichtung (101, 201, 301) derart betätigt wird, daß die Stromzufuhr zu einem bezüglich der Bewegungskoordinate (w) des Rotors (2) voraufgehenden Strang (210) beendet und zu einem nachfolgenden Strang (310) eingeleitet wird, dadurch gekennzeichnet,
daß jeder Signalaufbereitungszweig (111 bis 119) umfaßt:
- einen Impedanzwandler (111) zum Abgreifen der im zugehörigen Strang (110) induzierten Spannung (U1),
- einen Analogschalter (112) zum Ausblenden negativer Spannungsspitzen aus dem vom Impedanzwandler (111) abgegebenen Signal,
- eine Schaltflankenformstufe (113 bis 118) zum Bilden einer definierten Schaltflanke aus dem Ausgangssignal des Analogschalters (112) sowie
- eine Verzögerungsstufe (119), in der die Schaltflanke um ein vorgebbares Zeitintervall zum Bilden des Auslösesignals verzögert wird.

2. Anordnung nach Anspruch 1, gekennzeichnet durch
je einen Zustandsspeicher (100) zu jedem Strang (110), in dem ein Steuersignal zum Steuern eines dem Strang (110) zugeordneten, von der Schaltvorrichtung (101, 201, 301) umfaßten Schalters (101) zum Schalten des Stromes im Strang (110) ausschließlich durch das Auslösesignal vom voraufgehenden Strang (210) erzeugt und ausschließlich durch das Auslösesignal vom nachfolgenden Strang (310) beendet wird.

3. Anordnung nach Anspruch 1, dadurch gekennzeichnet,
daß die Schaltflankenformstufe (113 bis 118) umfaßt:
- einen Verstärker (113) zum Verstärken des vom Analogschalter (112) gelieferten Signals,
- einen Tiefpaß (114) zum Unterdrücken hochfrequenter Schwingungen,
- einen Komparator (115) zur Flankenversteilerung und
- eine Ausblendschaltung (117, 118) zum Ausblenden unerwünschter Signalflanken in dem vom Komparator (115) gelieferten Signal innerhalb eines vorgebbaren Zeitintervalls.

4. Anordnung nach Anspruch 2 oder 3, dadurch gekennzeichnet,
daß die Schaltflankenformstufe (113 bis 118) eine Potentialtrennstufe (116) umfaßt.

5. Anordnung nach Anspruch 4 in Verbindung mit Anspruch 3, dadurch gekennzeichnet,
daß die Potentialtrennstufe (116) zwischen den Komparator (115) und die Ausblendschaltung (117, 118) eingefügt ist.

6. Anordnung nach Anspruch 4 oder 5, dadurch gekennzeichnet,
daß die Potentialtrennstufe (116) mit einem Optokoppler ausgebildet ist.

7. Anordnung nach Anspruch 1, dadurch gekennzeichnet,
daß die in einem Strang (110) abgegriffene Spannung (U1) mittels einer Gegeninduktivität zwischen diesem und dem in Richtung der Bewegungskoordinate (w) des Rotors (2) voraufgehenden Strang (210) von dem darin fließenden Strom (I2) induziert wird.

8. Anordnung nach Anspruch 7, dadurch gekennzeichnet,
daß die abgegriffene Spannung (U1) im wesentlichen von der Veränderung der Gegeninduktivität bei Bewegung des Rotors (2) bestimmt wird.

## Claims

1. A arrangement including a reluctance motor and a circuit arrangement for commutating a reluctance motor, which motor comprises a rotor (2) which is movable relative to a stator (1) and a winding, which comprises at least three winding sections (110, 210, 310) which are at least substantially equidistantly spaced along the motion coordinate (w) of the rotor (2) and which are individually energizable with current via a switching device (101, 201, 301) in given positions of the rotor (2) relative to the stator (1), and a detection circuit comprising a signal processing branch (111 to 119) for each winding section (110), the signal processing branch (111 to 119) tapping off a voltage (U1) induced in each winding section (110) and, when the induced voltage (U1) reaches a given value, deriving an enable signal (at 119) from this voltage, which enable signal actuates the switching device (101, 201, 301) in such a manner that the current supply to a preceding winding section (210) viewed in the direction of the motion coordinate (w) of the rotor (2) is terminated and the current supply to a next winding section (310) is initiated, characterized in that
each signal processing branch (111 to 119) comprises:
- an impedance converter (111) for tapping off the voltage (U1) induced in the associated winding section (110),
- an analog switch (112) for removing negative voltage peaks from the signal supplied by the impedance converter (111),
- an edge shaper (113 to 118) for deriving a well-defined switching edge from the output signal of the analog switch (112), and
- a delay stage (119), in which the switching edge is delayed by a given time interval for the formation of the enable signal.

2. An arrangement as claimed in Claim 1, characterized by a status memory (100) for each winding section (110), in which memory a control signal for controlling a switch (101) included in the switching device (101, 201, 301) associated with the winding section (110) and adapted to switch the current in the winding section (110) is generated exclusively in response to the enable signal from the preceding winding section (210) and is terminated exclusively by the enable signal from the next winding section (310).

3. An arrangement as claimed in Claim 1, characterized in that the edge shaper (113 to 118) comprises:
- an amplifier (113) for amplifying the signal supplied by the analog switch (112),
- a low-pass filter (114) for suppressing high-frequency oscillations,
- a comparator (115) for making the edge steeper, and
- a suppression circuit (117, 118) for suppressing undesired signal edges in the signal supplied by the comparator (115) within a given time interval.

4. An arrangement as claimed in Claim 2 or 3, characterized in that the edge shaper (113 to 118) includes a potential isolation stage (116).

5. An arrangement as claimed in Claim 4 in conjunction with Claim 3, characterized in that
the potential isolation stage (116) is arranged between the comparator (115) and the suppression circuit (117, 118).

6. An arrangement as claimed in Claim 4 or 5, characterized in that the potential isolation stage (116) comprises an optocoupler.

7. An arrangement as claimed in Claim 1, characterized in that the voltage (U1) tapped from a winding section (110) is induced by the current (I2) in the preceding winding, viewed in the direction of the motion coordinate (w) of the rotor (2) section (210), through a mutual inductance between this winding section and the preceding winding section (210).

8. An arrangement as claimed in Claim 7, characterized in that the tapped voltage (U1) is essentially determined by the variation of the mutual inductance when the rotor (2) is in motion.

## Revendications

1. Dispositif, comprenant un moteur à réluctance ainsi qu'un montage de circuit pour la commutation du moteur à réluctance présentant un rotor (2) mobile par rapport à un stator (1) avec un enroulement, qui comporte au moins trois phases (110, 210, 310) agencées sur la coordonnée de mouvement (w) du rotor (2) à des distances au moins approximativement égales les unes des autres et pouvant être alimentées en courant séparément au moyen d'un dispositif de commutation (101, 201, 301) dans des positions déterminées du rotor (2) par rapport au stator (1), et un montage de détection avec à chaque fois une branche de remise en forme de signaux (111 à 119) associée à chaque phase (110), la branche de remise en forme de signaux (111 à 119) prélevant une tension (U1) induite dans chaque phase (110) de l'enroulement et générant, lorsque la tension induite (U1) atteint une valeur prédéfinie, un signal d'excitation (en 119), qui a pour effet d'actionner le dispositif de commutation (101, 201, 301), de manière à couper l'alimentation en courant pour une phase précédente (210) relativement à la coordonnée de mouvement (w) du rotor (2) et à l'amorcer pour une phase suivante (310),
caractérisé en ce que chaque branche de remise en forme de signaux (111 à 119) comprend :
- une convertisseur d'impédance (111) pour prélever la tension (U1) induite dans la phase associée (110),
- un interrupteur analogique (112) pour supprimer les pics de tension négatifs du signal délivré par le convertisseur d'impédance (111),
- un étage de formation de flancs de commutation (113 à 118) pour former un flanc de commutation défini à partir du signal de sortie de l'interrupteur analogique (112), et
- un étage à retard (119), dans lequel le flanc de commutation est retardé d'un intervalle de temps prédéterminable afin de former le signal d'excitation.

2. Dispositif suivant la revendication 1, caractérisé par
à chaque fois une mémoire d'état (100) pour chaque phase (110), dans laquelle un signal de commande servant à commander un commutateur (101) associé à la phase (110) et faisant partie du dispositif de commutation (101, 201, 301) est généré pour commuter le courant dans la phase (110) exclusivement par le signal d'excitation de la phase précédente (210) et est interrompu exclusivement par le signal d'excitation de la phase suivante (310).

3. Dispositif suivant la revendication 1, caractérisé en ce
que l'étage de formation de flancs de commutation (113 à 118) comprend :
- un amplificateur (113) pour amplifier le signal délivré par l'interrupteur analogique (112),
- un filtre passe-bas (114) pour atténuer les oscillations à haute fréquence,
- un comparateur (115) pour raidir les flancs, et
- un circuit de suppression (117, 118) pour supprimer les flancs de signal non souhaités présents dans le signal délivré par le comparateur (115) dans un intervalle de temps prédéterminable.

4. Dispositif suivant la revendication 2 ou 3, caractérisé en ce
que l'étage de formation de flancs de commutation (113 à 118) comprend un étage d'isolement galvanique (116).

5. Dispositif suivant la revendication 4, conjointement avec la revendication 3, caractérisé en ce
que l'étage d'isolement galvanique (116) est inséré entre le comparateur (115) et le circuit de suppression (117, 118).

6. Dispositif suivant la revendication 4 ou 5, caractérisé en ce
que l'étage d'isolement galvanique (116) est constitué d'un coupleur optique.

7. Dispositif suivant la revendication 1, caractérisé en ce
que la tension (U1) prélevée dans la phase (110) est induite grâce à une inductance mutuelle entre cette phase et la phase (210) précédente dans le sens de la coordonnée de mouvement (w) du rotor (2) par le courant (12) qui circule dans cette phase précédente.

8. Dispositif suivant la revendication 7, caractérisé en ce
que la tension prélevée (U1) est déterminée essentiellement par la variation de l'inductance mutuelle lors du mouvement du rotor (2).
